# EUROPEAN PATENT APPLICATION

(11) **EP 4 592 648 A1**
(43) Date of publication of application: **30.07.2025**
(21) Application number: 24210375.2
(22) Date of filing: 01.11.2024
(51) Int. Cl.: G01G 19/393

(54) **COMBINATION WEIGHING APPARATUS**

(30) Priority: 26.01.2024 JP 2024010174
(71) Applicant: Ishida Co., Ltd., Kyoto-shi Kyoto 606-8392 (JP)
(72) Inventor: KISHIKAWA, Mikio, Ritto-shi, Shiga, 520-3026 (JP); KAMIGAITO, Satoru, Ritto-shi, Shiga, 520-3026 (JP)
(74) Representative: Gill Jennings & Every LLP

(57) **Abstract**

A combination weighing apparatus 1 includes: an interface 11 that transmits a control signal for instructing an external apparatus 100 to start or stop supply of an article based on weight of the article on a distribution table 2 supplied from the external apparatus; a chute 12 that is vertically opened and temporarily blocks the article supplied on the distribution table 2; a lifting mechanism 13 that moves the chute 12 up and down with respect to the distribution table 2; and a controller 14 that controls a timing at which the chute 12 is moved up and down by the lifting mechanism 13 based on a transmission timing of the control signal by the interface 11.

## Description

### TECHNICAL FIELD

The present invention relates to a combination weighing apparatus.

### BACKGROUND ART

Conventionally, in a combination weighing apparatus, when a flowable article (for example, broilers) is supplied from a supply unit onto a conical distribution table, the article flows from the distribution table to a pool hopper at once. Therefore, in order to suppress this, a technique is known in which a ring-shaped chute surrounding the periphery of the distribution table is provided so as to be movable up and down, and the ring-shaped chute is lowered onto the distribution table at the same time as the article is discharged from the supply unit.

As a result, since the above-described article reaches the distribution table after the ring-shaped chute reaches the distribution table, the article is dammed by the ring-shaped chute and then appropriately discharged.

### SUMMARY OF THE INVENTION

However, in the conventional technique, when a part of the article remains on the distribution table, there is a problem that the ring-shaped chute rides on the ring-shaped chute and hinders the flow of the article.

In addition, when the timing at which the ring-shaped chute descends is delayed, there is a problem that the first article supplied from the supply unit passes through the gap between the ring-shaped chute and the distribution table and flows to the pool hopper at once.

The present invention has been made in view of the above problems, and an object of the present invention is to provide a combination weighing apparatus capable of supplying even a flowable article to a pool hopper under appropriate conveyance control.

A combination weighing apparatus according to an embodiment is summarized as including: an interface that transmits a control signal for instructing an external apparatus to start or stop supply of an article based on weight of the article on a distribution table supplied from the external apparatus; a chute that is vertically opened and temporarily blocks the article supplied on the distribution table; a lifting mechanism that moves the chute up and down with respect to the distribution table; and a controller that controls a timing at which the chute is moved up and down by the lifting mechanism based on a transmission timing of the control signal by the interface.

According to the present invention, it is possible to provide a combination weighing apparatus capable of supplying even a flowable article to a pool hopper under appropriate conveyance control.

### BRIEF DESCRIPTION OF THE DRAWINGS

FIG. 1 is a diagram for describing an example of an overall configuration of a combination weighing apparatus according to an embodiment;
FIG. 2 is a diagram for describing an example of the operation of a chute of the combination weighing apparatus according to an embodiment; and
FIG. 3 is a diagram illustrating an example of a relationship between a transmission timing of a control signal and a timing at which a chute is moved up and down in the combination weighing apparatus according to an embodiment.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

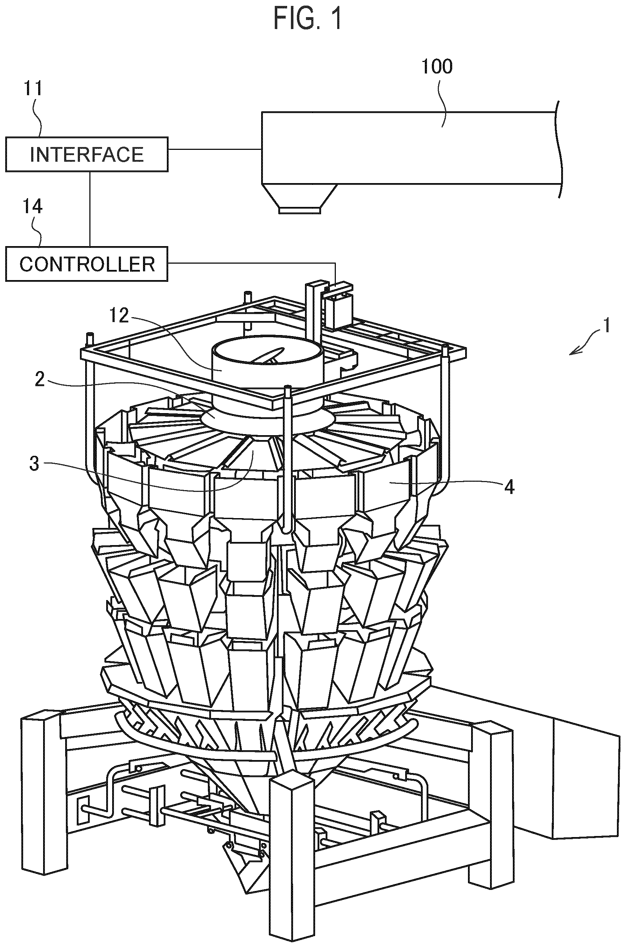

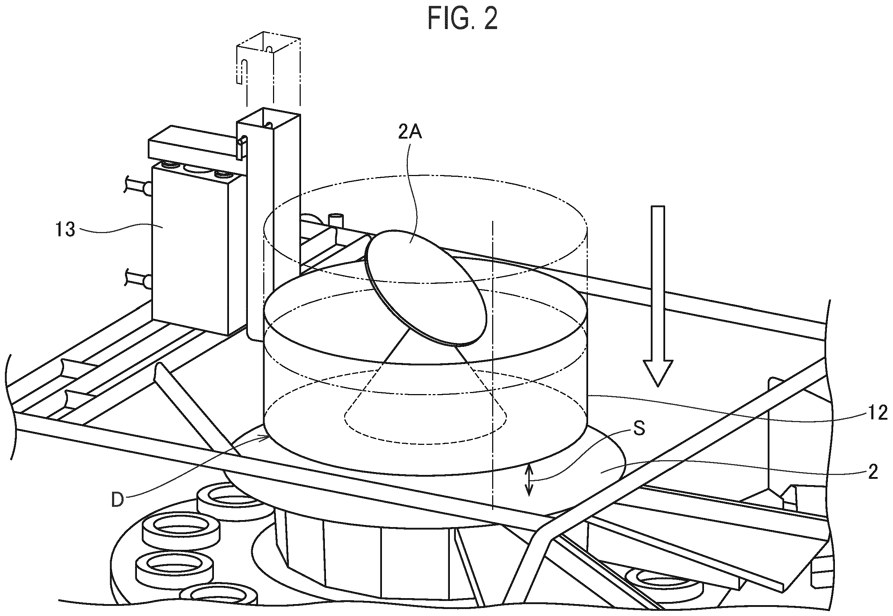

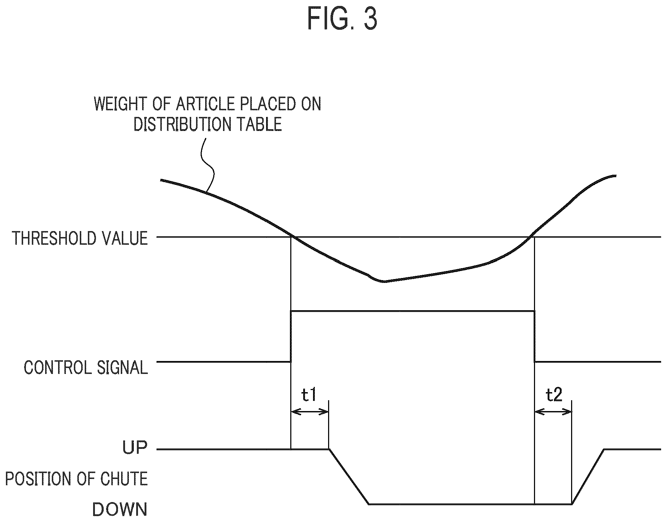

Hereinafter, a combination weighing apparatus 1 according to a first embodiment of the present invention will be described with reference to FIGS. 1 to 3. FIG. 1 is a diagram for describing an example of an overall configuration of the combination weighing apparatus 1 according to the present embodiment, FIG. 2 is a diagram for describing an example of the operation of a chute 12 of the combination weighing apparatus 1 according to the present embodiment, and FIG. 3 is a diagram illustrating an example of a relationship between a transmission timing of a control signal and a timing at which a chute is moved up and down in the combination weighing apparatus 1 according to the present embodiment.

The combination weighing apparatus 1 in FIG. 1 according to the present embodiment includes a distribution table 2, a plurality of radiation feeders 3, a plurality of pool hoppers 4, an interface 11, a chute 12, a lifting mechanism 13, and a controller 14.

The distribution table 2 radially disperses the articles supplied from the external apparatus 100. The distribution table 2 may be configured such that the conical table vibrates, or may be configured such that the conical table is rotated in a horizontal plane.

Here, the article in the present embodiment is assumed to be a breast or a thigh of a broiler that has adhesiveness and absorbs vibration, a block meat that tends to be lump when staying, a snack confection similar thereto, or the like, but the present invention is not limited thereto, and can be applied to other articles.

As illustrated in FIG. 2, a disk 2A inclinable to a predetermined angle is provided at the top of the triangular pyramid of the distribution table 2. The disk 2A is rotatable in a horizontal plane, and when an article falls and hits the disk 2A, the disk 2A is configured to freely change its direction and angle according to a position to which a force is applied. However, the disk 2A is regulated so as not to be directed in the vertical direction and to remain within a predetermined angle.

The plurality of radiation feeders 3 conveys the article conveyed from the distribution table 2 in a direction away from the distribution table 2. As illustrated in FIG. 1, the plurality of radiation feeders 3 is disposed substantially circumferentially below the distribution table 2 and around the distribution table 2. Further, the radiation feeder 3 may be constituted by an electromagnetic vibrator and a vibration feeder that advances the article on the trough with a parallel plate spring, or may be a belt conveyor.

The plurality of pool hoppers 4 is provided corresponding to the plurality of radiation feeders 3, and receives and stores articles supplied from the plurality of radiation feeders 3.

The interface 11 transmits a control signal for instructing the external apparatus 100 to start or stop the supply of the article based on the weight of the article on the distribution table 2 supplied from the external apparatus 100. Here, the interface 11 transmits such a control signal in response to an instruction from the controller 14.

As illustrated in FIGS. 1 and 2, the chute 12 is open in the vertical direction and temporarily blocks the article supplied to the distribution table 2. In the present embodiment, the chute 12 is a ring-shaped chute.

As illustrated in FIG. 2, the lifting mechanism 13 moves the chute 12 up and down with respect to the distribution table 2. Here, the lifting mechanism 13 moves the chute 12 up and down in accordance with an instruction from the controller 14.

The controller 14 controls the timing at which the chute by the lifting mechanism 13 is moved up and down based on the transmission timing of the control signal by the interface 11.

Here, the controller 14 controls the timing of moving the chute 12 downward so that the timing at which the article supplied from the external apparatus 100 reaches the distribution table 2 coincides with the timing at which the chute 12 reaches the lowest point D (see FIG. 2) .

For example, the controller 14 may start moving the chute 12 downward after a predetermined time has elapsed from the transmission of the control signal for instructing the start of the supply of the article.

Specifically, as illustrated in FIG. 3, firstly, the controller 14 instructs the interface 11 to transmit a control signal for instructing the start of the supply of the article at a timing when the weight of the article placed on the distribution table 2 becomes equal to or less than a threshold value. As a result, the articles are sequentially supplied from the external apparatus 100 to the distribution table 2.

Secondly, the controller 14 instructs the lifting mechanism 13 to move the chute 12 downward after a predetermined period t1 has elapsed from the transmission of the control signal for instructing the start of the supply of the article (that is, after the predetermined period t1 has elapsed since the instruction is issued to the interface 11).

As a result, the chute 12 can be caused to reach the bottom dead center in accordance with the timing at which the article falling from the external apparatus 100 reaches the distribution table 2. In the period t1, during the test operation, fine adjustment can be performed from the operation unit while observing the difference in timing, and the lowering speed of the lifting mechanism 13 can also be finely adjusted.

Thirdly, the controller 14 instructs the interface 11 to transmit a control signal for indicating the stop of the supply of the article at a timing when the weight of the article placed on the distribution table 2 becomes equal to or more than a threshold value. As a result, the supply of the article falling from the external apparatus 100 can be stopped.

Fourthly, the controller 14 instructs the lifting mechanism 13 to move the chute 12 upward after a predetermined period t2 has elapsed from the transmission of the control signal for instructing the stop of the supply of the article (that is, after the predetermined period t2 has elapsed since the instruction is issued to the interface 11). Accordingly, the articles stored on the distribution table 2 can be sequentially conveyed to the radiation feeder 3 by the drive control of the distribution table 2.

In addition, as illustrated in FIG. 2, a gap S through which an article cannot pass may exist between the lowest point D of the chute 12 and the distribution table 2. According to such a configuration, it is possible to avoid a situation in which the article remaining on the distribution table 2 is damaged by the downward movement of the chute 12.

According to the present embodiment, since the controller 14 can perform adjustment so that the ring-shaped chute 12 and the article discharged from the external apparatus 100 reach the distribution table 2 substantially simultaneously, the article supplied to the distribution table 2 remains in the chute 12 and then is discharged. As a result, it is possible to suppress the momentum of the product falling from the external apparatus 100 on the distribution table 2 and supply an appropriate amount to the pool hopper 4 by the drive control of the distribution table 2 and the dispersion feeder 3.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### REFERENCE SIGNS LIST

- 1: Combination weighing apparatus
- 2: Distribution table
- 11: Interface
- 12: Chute
- 13: Lifting mechanism
- 14: Controller
- 100: External apparatus
- D: Lowest point
- S: Gap

## Claims

1. A combination weighing (1) apparatus comprising:
an interface (11) that transmits a control signal for instructing an external apparatus (100) to start or stop supply of an article based on weight of the article on a distribution table (2) supplied from the external apparatus (100);
a chute (12) that is vertically opened and temporarily blocks the article supplied on the distribution table (2);
a lifting mechanism (13) that moves the chute (12) up and down with respect to the distribution table (2); and
a controller (14) that controls a timing at which the chute (12) is moved up and down by the lifting mechanism (13) based on a transmission timing of the control signal by the interface (11).

2. The combination weighing apparatus (1) according to claim 1, wherein
the controller (14) controls the timing of moving the chute (12) downward so that timing at which the article supplied from the external apparatus (100) reaches the distribution table (2) coincides with timing at which the chute (12) reaches a lowest point.

3. The combination weighing apparatus (1) according to claim 1 or 2, wherein
the controller (14) starts moving the chute (12) downward after a predetermined time has elapsed from transmission of the control signal for instructing the start of the supply of the article.

4. The combination weighing apparatus (1) according to any of the preceding claims, wherein
a gap (S) exists between the lowest point (D) of the chute (12) and the distribution table (2).
